# EUROPÄISCHE PATENTSCHRIFT

(11) **EP 3 234 230 B1**
(45) Veröffentlichungstag und Bekanntmachung des Hinweises auf die Patenterteilung: **17.04.2019**
(21) Anmeldenummer: 15828531.2
(22) Anmeldetag: 21.12.2015
(51) Int. Cl.: C25D 5/02, C25D 5/06, C25D 7/00, C25D 11/02, C25D 11/34, C25D 17/14, C25F 3/06, C25F 3/08

(54) **VERFAHREN ZUM OPTISCHEN BESCHRIFTEN UND/ODER MARKIEREN VON RUNDMATERIAL**
METHOD FOR OPTICALLY INSCRIBING AND/OR MARKING ROUND STOCK
PROCÉDÉ D'INSCRIPTION ET/OU DE MARQUAGE OPTIQUES D'ÉLÉMENTS RONDS

(30) Priorität: 19.12.2014 DE 102014119305; 26.10.2015 DE 102015118254; 30.10.2015 DE 102015118680; 05.11.2015 DE 102015119033
(43) Veröffentlichungstag der Anmeldung: 25.10.2017
(73) Patentinhaber: Weber-Hydraulik GmbH, 74363 Güglingen (DE)
(72) Erfinder: TRIVIGNO, Vincenzo, 71735 Eberdingen (DE); SCHWAB, Christian, 75447 Sternenfels (DE); BRECHT, Thorsten, 75210 Keltern (DE)
(74) Vertreter: Lemcke, Brommer & Partner Patentanwälte Partnerschaft mbB
(86) Internationale Anmeldenummer: PCT/IB2015/059855
(87) Internationale Veröffentlichungsnummer: WO 2016/098087

(56) Entgegenhaltungen:
- EP-A1- 2 048 265
- EP-A2- 0 405 006
- WO-A1-98/06884
- WO-A2-2009/118412
- CH-A- 554 756
- US-A- 1 996 187

## Beschreibung

### Technisches Gebiet

Die vorliegende Erfindung betrifft das technische Gebiet des Beschriftens und/oder Markierens von für Fluidzylinder, wie etwa für Hydraulik- und/oder Pneumatikzylinder, vorgesehenen, Kolbenstangen.

### Stand der Technik

Durch elektrochemische bzw. galvanische Behandlung von Metalloberflächen können diese in Verbindung mit Elektrolyt-Lösungen gezielt oxidiert, reduziert oder geätzt werden, um die Eigenschaften selbiger zu verändern.

Hierbei ist es durch gezieltes Oxidieren der Oberfläche möglich, dauerhaft verfärbte Bereiche auf der Oberfläche zu erzielen. Die Anwendung dieses Beschriftungs- und Markierungsverfahrens wird zumeist im kleinen Maßstab zum Beschriften kleiner Bauteile verwendet.

Als Sonderverfahren der Galvanotechnik wird mit der Tampongalvanik beim Markieren von Metalloberflächen eine Beschichtung aufgetragen; insbesondere wird das zu beschichtende Bauteil am Minuspol oder negativen Anschluss einer Galvanikanlage befestigt. Die Anode kann eine von einem Wattetampon umhüllte Platte oder ein von einem Wattetampon umhüllter Stab aus nichtlöslichem Material sein. Über eine Schlauchleitung kann diesem Werkzeug die Elektrolyt-Lösung zugeführt werden; alternativ kann die Platte oder der Stab mit dem Wattetampon in ein Elektrolyt-Bad getaucht werden.

Das beschriebene elektrochemische bzw. galvanische Verfahren, insbesondere das Tampongalvanisier-Verfahren, ist unter anderem auch auf verchromten Oberflächen einsetzbar und wird überwiegend zur Reinigung, zur Reparatur von Beschichtungen, zum Beispiel einer Chromschicht, sowie zur Beschriftung bzw. Markierung von Oberflächen eingesetzt.

Die dauerhafte farbige Beschriftung und/oder Markierung stark beanspruchter metallischer Oberflächen auf Rundmaterial, zum Beispiel auf Kolbenstangen von Fluidzylindern, wie etwa von Hydraulik- und/oder Pneumatikzylindern, ist konventionellerweise mittels Laserstrahl möglich, wobei hier Anlassfarben erzeugt werden und/oder Material von der Oberfläche des Rundmaterials abgetragen wird.

Die mit dem Lasern verbundene thermische Belastung schädigt das Material, so dass kostspielige Gegenmaßnahmen, zum Beispiel in Form spezieller Beschichtungen der Bauteile, ergriffen werden müssen, um übermäßige Korrosion zu vermeiden. Auch zeigt sich die gelaserte Markierung nur bedingt widerstandsfähig gegen mechanische Belastungen, das heißt die Oberfläche des Rundmaterials ist gegenüber mechanischer Beanspruchung nur unzureichend beständig. Ein weiterer Nachteil des Laserns sind lange Prozesszeiten.

Die WO 98/06884 beschreibt ein Verfahren zum galvanischen Hartverchromen der Lauffläche einer Kolbenstange, wobei Endbereiche der Kolbenstange, die nicht mit einer Hartchromschicht versehen werden sollen, mit individuellen Masken abgedeckt werden.

Die WO 2009/118412 beschreibt das Aufbringen eines Barcodes auf eine metallische Oberfläche, beispielsweise ein Metallrohr, durch elektrolytisches Abscheiden einer Metallbeschichtung, wobei nicht zu beschichtende Flächen mit einer Maske abgedeckt werden.

### Darstellung der vorliegenden Erfindung: Aufgabe, Lösung, Vorteile

Unter Würdigung des umrissenen Stands der Technik liegt der vorliegenden Erfindung die Aufgabe zugrunde, ein Verfahren gemäß dem Oberbegriff des Anspruchs 1 sowie einen entsprechenden Fluidzylinder mit einer derart markierten Kolbenstange so weiterzubilden, dass die vorstehend dargelegten Nachteile und Unzulänglichkeiten vermieden werden.

Diese Aufgabe wird durch ein Verfahren mit den Merkmalen des Anspruchs 1 sowie durch ein Rundmaterial mit den Merkmalen des Anspruchs 13 gelöst. Vorteilhafte Ausgestaltungen und zweckmäßige Weiterbildungen der vorliegenden Erfindung sind in den jeweiligen Unteransprüchen gekennzeichnet.

Gemäß der vorliegenden Erfindung wird also ein selektives Galvanisieren zum Beschriften und/oder Markieren einer Kolbenstange eines Fluidzylinders, wie etwa eines Hydraulik- und/oder Pneumatikzylinders, vorgeschlagen.

Dieses Verfahren gemäß der vorliegenden Erfindung ist kostengünstig und schnell zu realisieren. Die Korrosionsbeständigkeit des zu beschriftenden und/oder zu markierenden Materials wird durch die Beschriftung und/oder Markierung nicht wesentlich beeinträchtigt oder sogar verbessert, so dass auf eine spezielle Beschichtung und/oder Markierung verzichtet werden kann.

Die Kolbenstange kann mittels der elektrochemischen, insbesondere galvanischen, Markierung, zum Beispiel mittels Tampongalvanisierens, farblich und beständig beschriftet und/oder markiert werden. Zu diesem Beschriften und/oder Markieren der Kolbenstange wird durch mindestens eine Maske oder Schablone der zu beschriftende und/oder markierende Bereich vom nicht zu beschriftenden und/oder markierenden Bereich abgetrennt.

Indem die Kolbenstange mindestens einer Elektrolytlösung ausgesetzt wird, sei durch Eintauchen in diese oder durch Überfahren mit mindestens einer in den Elektrolyten getauchten Elektrode, kann die Oberfläche der Kolbenstange verfärbt werden. Auf diese Weise kann auch in großem Maßstab beschriftet und/oder markiert werden; so können zum Beispiel auch große Kolbenstangen, so etwa von einer Länge bis zu etwa 4.500 Millimetern, beschriftet und/oder markiert werden.

Insbesondere lagert sich beim Tampon-Galvanisieren, bei dem die Anode
- als mindestens eine von mindestens einem Schwamm, Strumpf, Tuch, Vlies oder Wattetampon umhüllte Platte oder
- als mindestens ein von mindestens einem Schwamm, Strumpf, Tuch, Vlies oder Wattetampon umhüllter Stab
aus gegenüber dem Elektrolyten nichtlöslichem Werkstoff ausgebildet sein kann, durch Überfahren der Kolbenstange mit einer Elektrode in einem Elektrolytbad Material aus dem Elektrolyten als Zweitschicht auf der bereits geätzten oder erstbeschichteten Oberfläche der Kolbenstange, ab.

Bei entsprechender Wahl des Beschichtungswerkstoffs, insbesondere Schwarzchrom, Schwarznickel, Schwarzrhodium, Schwarzruthenium, Kupfer-Zinn-Legierung, Kupfer-Zinn-Zink-Legierung oder Gold, zum Beispiel Hartgold, kann durch dessen Eigenschaften ein Muster mit Kontrast auf die Oberfläche der Kolbenstange, aufgebracht werden.

Die Oberfläche der erstbeschichteten Kolbenstange kann auch in Verbindung mit einem zuvor durchgeführten Ätzverfahren so vorbereitet werden, dass die Zweitschicht
- eine atomare Verbindung mit der Erstschicht eingeht und/oder
- die Zweitschicht keine Veränderung der Oberflächengeometrie der Kolbenstange verursacht.

Es kann also so geätzt werden, dass die Oberfläche angeraut und Material abgetragen wird, so dass sich Vertiefungen ausbilden. Die Zweitschicht aus Schwarzchrom, Schwarznickel, Schwarzrhodium, Schwarzruthenium, Kupfer-Zinn-Legierung, Kupfer-Zinn-Zink-Legierung oder Gold, insbesondere Hartgold, gleicht diesen Materialabtrag dann wieder aus.

Mit umfasst durch die vorliegende Erfindung ist auch eine Lösung (= sogenannte inverse oder invertierte Lösung in Form von Bad-Galvanik), bei der die Oberfläche der Kolbenstange mit Schwarzchrom, mit Schwarznickel, mit Schwarzrhodium, mit Schwarzruthenium, mit Kupfer-Zinn-Legierung, mit Kupfer-Zinn-Zink-Legierung oder mit Gold, insbesondere mit Hartgold, beschichtet wird und die so beschichteten Bereiche dann mittels der Abdeckung abgedeckt werden.

Durch Ätzen der beschichteten Oberfläche in den unmaskierten, das heißt nicht von der Abdeckung erfassten Bereichen wird das Schwarzchrom, das Schwarznickel, das Schwarzrhodium, das Schwarzruthenium, die Kupfer-Zinn-Legierung, die Kupfer-Zinn-Zink-Legierung oder das Gold dort entfernt und die nicht-dunklen Bereiche danach hartverchromt.

Im Sinne einer robusten und widerstandsfähigen Beschriftung und/oder Markierung der Oberfläche der Kolbenstange sollte diese also mechanischen Einflüssen durch Führungsbänder und Dichtungen ebenso widerstehen können wie chemischen Einflüssen, Witterung und UV-Strahlung. Auch muss die Kolbenstange aus Stahl unter der Beschriftung und/oder Markierung vor Korrosion geschützt werden.

In zweckmäßiger Weise weist die Beschriftung und/oder Markierung zur, insbesondere hartverchromten, Oberfläche also einen hohen Kontrast auf, um von einer Sensoranordnung sicher erfasst werden zu können. Hierzu können die jeweiligen Codebereiche in bevorzugter Weise mit Schwarzchrom beschichtet werden. Schwarzchrom erscheint nahezu schwarz und ist chemisch sowie mechanisch widerstandsfähig gegen äußere Einflüsse.

Zur Erzeugung präziser Beschriftungen und/oder Markierungen werden die nicht zu markierenden Bereiche maskiert, zum Beispiel durch schrumpfbares Material, wie etwa durch mindestens einen Schrumpfschlauch, oder in Form von Lack, wie etwa Schutzlack, Spritzlack oder Tauchlack, oder in Form von Tinte oder in Form mindestens einer Heißschmelz- oder Hotmelt-Beschichtung.

Die freiliegenden Bereiche der Hartchromschicht können bearbeitet und anschließend in einem galvanischen Prozess mit Schwarzchrom beschichtet werden, so dass eine gleichmäßig tief dunkel gefärbte Schicht entsteht.

Die Vorteile der vorliegenden Erfindung sind insbesondere:
- keine nachteilige Veränderung der Oberfläche der Kolbenstange, insbesondere in Bezug auf Korrosionsbeständigkeit und/oder Glattheit der Oberfläche;
- Bereitstellen einer klar konturierten und dauerhaft widerstandsfähigen Beschriftung und/oder Markierung;
- Vorteile bezüglich Prozesszeiten sowie Prozess- und Anlagenkosten, insbesondere gegenüber auf Laser basierenden Beschriftungs- und/oder Markierungsverfahren.

Als mögliches technisches Anwendungs-/Einsatzgebiet der vorliegenden Erfindung sind also insbesondere anzusehen:
- Beschriften und Markieren von Kolbenstangen;
- galvanische Markierung von Edelstahl- und/oder Chromoberflächen auf Kolbenstangen für Fluidzylinder, insbesondere Hydraulik- und/oder Pneumatikzylinder.

### Kurze Beschreibung der Zeichnungen

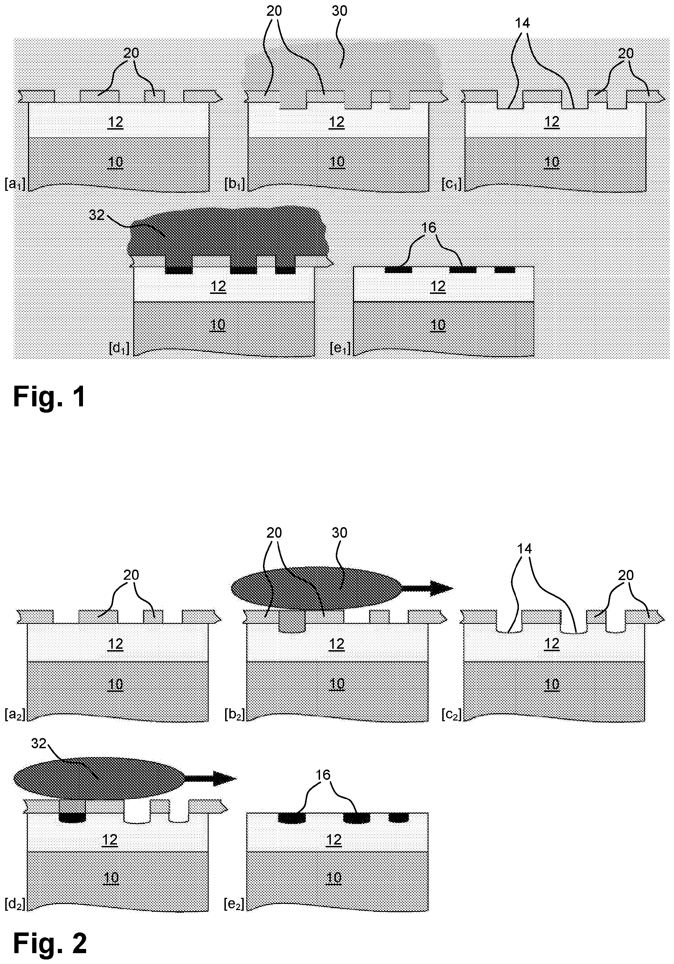

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand der beiden durch Fig. 1 und Fig. 2 veranschaulichten Ausführungsbeispiele näher erläutert.

Es zeigt:
- Fig. 1: in schematischer Abfolge (, nämlich [a₁] --> [b₁] --> [c₁] --> [d₁] --> [e₁]) ein erstes Ausführungsbeispiel für ein Verfahren gemäß der vorliegenden Erfindung, an dessen Ende ein Verfahrensprodukt gemäß der vorliegenden Erfindung stehen kann; und
- Fig. 2: in schematischer Abfolge (, nämlich [a_{2]} --> [b_{2]} --> [c_{2]} --> [d_{2]} --> [e₂]) ein zweites Ausführungsbeispiel für ein Verfahren gemäß der vorliegenden Erfindung, an dessen Ende ein Verfahrensprodukt gemäß der vorliegenden Erfindung stehen kann.

Gleiche oder ähnliche Ausgestaltungen, Elemente oder Merkmale sind in Fig. 1 und in Fig. 2 mit identischen Bezugszeichen versehen

### Bester Weg zur Ausführung der vorliegenden Erfindung

Zur Vermeidung überflüssiger Wiederholungen beziehen sich die nachfolgenden Erläuterungen hinsichtlich der Ausgestaltungen, Merkmale und Vorteile der vorliegenden Erfindung - soweit nicht anderweitig angegeben - auf beide anhand Fig. 1 und Fig. 2 veranschaulichten Ausführungsbeispiele der vorliegenden Erfindung.

Grundsätzlich kann mittels des anhand Fig. 1 bzw. anhand Fig. 2 exemplarisch veranschaulichten Verfahrens ein mit einer Beschriftung und/oder Markierung 16 versehenes Rundmaterial 10 hergestellt werden (vgl. Verfahrensschritt [e₁] in Fig. 1 bzw. Verfahrensschritt [e₂] in Fig. 2). Das Rundmaterial 10 ist hierbei die Kolbenstange eines Fluidzylinders, insbesondere eines Hydraulik- und/oder Pneumatikzylinders.

Ausgangspunkt des vorliegenden Verfahrens ist also das Rundmaterial 10 aus metallischem Werkstoff, insbesondere aus Chrom oder aus Stahl, zum Beispiel aus gehärtetem Stahl, aus verchromtem Stahl oder aus Edelstahl.

Eine an die Form der Oberfläche 12 dieses Rundmaterials 10 angepasste, die Beschriftung und/oder Markierung 16 wiedergebende Abdeckung 20 wird so auf die Oberfläche 12 aufgesetzt, dass der mit der Beschriftung und/oder Markierung 16 zu versehende Bereich der Oberfläche 12 nicht von der Abdeckung 20 abgedeckt wird und der restliche Bereich von der Abdeckung 20 abgedeckt wird (vgl. Verfahrensschritt [a₁] in Fig. 1 bzw. Verfahrensschritt [a₂] in Fig. 2).

Für die Ausgestaltung der Abdeckung 20 gibt es verschiedene exemplarische Optionen:
- Maske aus hartem Material, insbesondere aus Kunststoff oder aus Metall, mit zusätzlicher Abdichtung zwischen der Maske und der Oberfläche 12;
- Schablone, insbesondere aus selbstklebender und/oder unter Spannung aufgezogener Folie;
- schrumpfbares Material, insbesondere Schrumpfschlauch;
- (auf der Oberfläche 12 aufgedruckter) Lack, insbesondere Schutzlack, Spritzlack oder Tauchlack;
- (auf der Oberfläche 12 aufgedruckte) Tinte;
- Heißschmelz- oder Hotmelt-Beschichtung.

Das Rundmaterial 10 mit der Abdeckung 20 wird einem ersten Elektrolyten 30 ausgesetzt (vgl. Verfahrensschritt [b₁] in Fig. 1 bzw. Verfahrensschritt [b₂] in Fig. 2).

Mittels dieses ersten Elektrolyten 30 wird im mit der Beschriftung und/oder Markierung 16 zu versehenden Bereich unter Bildung von Vertiefungen 14 Material von der Oberfläche 12 abgetragen (vgl. Verfahrensschritt [c₁] in Fig. 1 bzw. Verfahrensschritt [c₂] in Fig. 2); insbesondere werden die Vertiefungen 14 mittels des ersten Elektrolyten 30 in die nicht von der Abdeckung 20 abgedeckten, mit der Beschriftung und/oder Markierung 16 zu versehenden Bereiche der Oberfläche 12 eingeätzt.

Dann wird das Rundmaterial 10 mit der Abdeckung 20 und mit den nicht von der Abdeckung 20 abgedeckten Vertiefungen 14 einem zweiten Elektrolyten 32 ausgesetzt (vgl. Verfahrensschritt [d₁] in Fig. 1 bzw. Verfahrensschritt [d₂] in Fig. 2).

Mittels dieses zweiten Elektrolyten 32 werden die Vertiefungen 14 zur Bildung der sich optisch, insbesondere farblich, von der Oberfläche 12 unterscheidenden Beschriftung und/oder Markierung 16 gefüllt (vgl. Verfahrensschritt [e₁] in Fig. 1 bzw. Verfahrensschritt [e₂] in Fig. 2). Im Ergebnis können die Vertiefungen 14 mit Schwarzchrom, mit Schwarznickel, mit Schwarzrhodium, mit Schwarzruthenium, mit Kupfer-Zinn-Legierung, mit Kupfer-Zinn-Zink-Legierung oder mit Gold, insbesondere mit Hartgold, gefüllt sein.

Die Beschriftung und/oder Markierung 16 ist durch einen Code, insbesondere durch einen Barcode oder Strichcode, zum Beispiel durch einen fortlaufend eineindeutig binären Barcode oder Strichcode, gebildet. Der Code weist zum Zwecke der optischen Positionsbestimmung und/oder Wegmessung eine den tatsächlichen Hub oder die tatsächliche Lage des Rundmaterials wiedergebende absolute Codestruktur auf.

Hinsichtlich des Zuführens des ersten Elektrolyten 30 und/oder des zweiten Elektrolyten 32 gibt es verschiedene Möglichkeiten:
Im ersten Ausführungsbeispiel gemäß Fig. 1 wird das Rundmaterial 10 mit der Abdeckung 20 in ein Bad oder eine Lösung des ersten Elektrolyten 30 und/oder des zweiten Elektrolyten 32 eingesetzt oder eingetaucht.

Im zweiten Ausführungsbeispiel gemäß Fig. 2 wird das Rundmaterial 10 mit der Abdeckung 20 mit einer mit dem ersten Elektrolyten 30 und/oder mit dem zweiten Elektrolyten 32, zum Beispiel über eine Schlauchleitung, versorgten Elektrode, insbesondere mit einer in den ersten Elektrolyten 30 und/oder in den zweiten Elektrolyten 32 getauchten Elektrode, zumindest im nicht von der Abdeckung 20 abgedeckten Bereich der Oberfläche 12 im Tampongalvanisier-Verfahren in Pfeilrichtung überstrichen.

Hierbei ist die als Anode fungierende Elektrode
- als mindestens eine von mindestens einem Schwamm, Strumpf, Tuch, Vlies oder Wattetampon umhüllte Platte oder
- als mindestens ein von mindestens einem Schwamm, Strumpf, Tuch, Vlies oder Wattetampon umhüllter Stab
aus gegenüber dem Elektrolyten nichtlöslichem Werkstoff ausgebildet.

### Liste der Bezugszeichen

- 10: Rundmaterial, insbesondere Kolbenstange
- 12: Oberfläche des Rundmaterials 10
- 14: Vertiefung in Oberfläche 12
- 16: Beschriftung und/oder Markierung
- 20: Abdeckung, insbesondere Maske oder Schablone
- 30: erster Elektrolyt
- 32: zweiter Elektrolyt

## Patentansprüche

1. Verfahren zum Aufbringen einer Beschriftung und/oder zum Aufbringen einer Markierung (16) in Form eines Codes auf eine Kolbenstange (10) eines Fluidzylinders, wobei zumindest die Oberfläche (12) der Kolbenstange (10) aus metallischem Werkstoff, insbesondere aus Chrom oder aus Stahl, zum Beispiel aus gehärtetem Stahl, aus verchromtem Stahl oder aus Edelstahl, ist,
**dadurch gekennzeichnet,**
- **dass** mindestens eine an die Form der Oberfläche (12) angepasste, insbesondere die Beschriftung und/oder Markierung (16) wiedergebende, Abdeckung (20) so auf die Oberfläche (12) aufgesetzt wird, dass der mit der Beschriftung und/oder Markierung (16) zu versehende Bereich nicht von der Abdeckung (20) abgedeckt wird,
- **dass** die Kolbenstange (10) mit der Abdeckung (20) einem ersten Elektrolyten (30) ausgesetzt wird, mittels dessen im mit der Beschriftung und/oder Markierung (16) zu versehenden Bereich unter Bildung von Vertiefungen (14) Material von der Oberfläche (12) abgetragen wird, und
- **dass** die Kolbenstange (10) mit der Abdeckung (20) und mit den nicht von der Abdeckung (20) abgedeckten Vertiefungen (14) einem zweiten Elektrolyten (32) ausgesetzt wird, mittels dessen die Vertiefungen (14) zur Bildung der sich optisch, insbesondere farblich, von der Oberfläche (12) unterscheidenden Beschriftung und/oder Markierung (16) gefüllt werden.

2. Verfahren gemäß Anspruch 1, **dadurch gekennzeichnet, dass** die Vertiefungen (14) mit Schwarzchrom, mit Schwarznickel, mit Schwarzrhodium, mit Schwarzruthenium, mit einer Kupfer-Zinn-Legierung, mit einer Kupfer-Zinn-Zink-Legierung oder mit Gold, insbesondere mit Hartgold, gefüllt werden.

3. Verfahren gemäß Anspruch 1 oder 2, **dadurch gekennzeichnet, dass** die Abdeckung (20)
- durch mindestens eine Maske aus Kunststoff oder aus Metall, mit zusätzlicher Abdichtung zwischen der Maske und der Oberfläche (12) oder
- durch mindestens eine Schablone, insbesondere aus selbstklebender und/oder unter Spannung aufgezogener Folie, oder
- durch schrumpfbares Material, insbesondere durch mindestens einen Schrumpfschlauch,
gebildet ist.

4. Verfahren gemäß mindestens einem der Ansprüche 1 bis 3, **dadurch gekennzeichnet, dass** die Abdeckung (20)
- in Form von Lack, insbesondere Schutzlack, Spritzlack oder Tauchlack, oder
- in Form von Tinte oder
- in Form mindestens einer Heißschmelz- oder Hotmelt-Beschichtung ausgebildet ist.

5. Verfahren gemäß Anspruch 4, **dadurch gekennzeichnet, dass** die Abdeckung (20) auf der Oberfläche (12) aufgedruckt ist.

6. Verfahren gemäß mindestens einem der Ansprüche 1 bis 5, **dadurch gekennzeichnet, dass** die Vertiefungen (14) mittels des ersten Elektrolyten (30) in die nicht von der Abdeckung (20) abgedeckten, mit der Beschriftung und/oder Markierung (16) zu versehenden Bereiche der Oberfläche (12) eingeätzt werden.

7. Verfahren gemäß mindestens einem der Ansprüche 1 bis 6, **dadurch gekennzeichnet, dass** die Kolbenstange (10) mit der Abdeckung (20) in mindestens ein Bad oder mindestens eine Lösung des ersten Elektrolyts (30) und/oder des zweiten Elektrolyten (32) eingesetzt oder eingetaucht wird.

8. Verfahren gemäß mindestens einem der Ansprüche 1 bis 7, **dadurch gekennzeichnet, dass** die mit der Abdeckung (20) versehene Kolbenstange (10) mit einer mit dem ersten Elektrolyt (30) und/oder mit dem zweiten Elektrolyt (32) versorgten Elektrode, insbesondere mit einer in den ersten Elektrolyt (30) und/oder in den zweiten Elektrolyt (32) getauchten Elektrode, zumindest im nicht von der Abdeckung (20) abgedeckten Bereich der Oberfläche (12) im Tampongalvanisier-Verfahren überstrichen wird.

9. Verfahren gemäß Anspruch 8, **dadurch gekennzeichnet, dass** die Elektrode
- als mindestens eine von mindestens einem Schwamm, Strumpf, Tuch, Vlies oder Wattetampon umhüllte Platte oder
- als mindestens ein von mindestens einem Schwamm, Strumpf, Tuch, Vlies oder Wattetampon umhüllter Stab
aus gegenüber dem Elektrolyt nichtlöslichem Werkstoff ausgebildet ist.

10. Verfahren gemäß mindestens einem der Ansprüche 1 bis 9, **dadurch gekennzeichnet, dass** die Markierung (16) mindestens einen Barcode oder Strichcode, insbesondere mindestens einen fortlaufend eineindeutig binären Barcode oder Strichcode, aufweist.

11. Verfahren gemäß mindestens einem der Ansprüche 1 bis 10, **dadurch gekennzeichnet, dass** es sich bei dem Fluidzylinder um einen Hydraulik- und/oder Pneumatikzylinder handelt.

12. Verfahren gemäß Anspruch 10 und 11, **dadurch gekennzeichnet, dass** der Code, insbesondere zum Zwecke der optischen Positionsbestimmung und/oder Wegmessung, eine den tatsächlichen Hub oder die tatsächliche Lage der Kolbenstange wiedergebende absolute Codestruktur aufweist.

13. Fluidzylinder, insbesondere Hydraulik- und/oder Pneumatikzylinder mit einer Kolbenstange, welche zum Zwecke der optischen Positionsbestimmung und/oder Wegmessung auf der Oberfläche einen Code (16) aufgebracht hat, der eine den tatsächlichen Hub oder die tatsächliche Lage der Kolbenstange wiedergebende Codestruktur aufweist,
**dadurch gekennzeichnet,**
**dass** der Code (16) durch galvanische Abscheidung nach einem Verfahren eines der vorangehenden Ansprüche aufgebracht ist,
- indem eine an die Form der Oberfläche (12) angepasste, den Code (16) wiedergebende Abdeckung (20) so auf die Oberfläche (12) aufgesetzt wurde, dass der mit der Beschriftung und/oder Markierung (16) zu versehende Bereich nicht von der Abdeckung (20) abgedeckt wurde,
- indem die Kolbenstange (10) mit der Abdeckung (20) einem ersten Elektrolyten (30) ausgesetzt wurde, mittels dessen im mit dem Code (16) zu versehenden Bereich unter Bildung von Vertiefungen (14) Material von der Oberfläche (12) abgetragen wurde, und
- indem die Kolbenstange (10) mit der Abdeckung (20) und mit den nicht von der Abdeckung (20) abgedeckten Vertiefungen (14) einem zweiten Elektrolyten (32) ausgesetzt wurde, mittels dessen die Vertiefungen (14) zur Bildung des sich optisch, insbesondere farblich, von der Oberfläche (12) unterscheidenden Codes (16) gefüllt wurde.

## Claims

1. Method for applying an inscription and/or for applying a marking (16) in the form of a code to a piston rod (10) of a fluid cylinder, wherein at least the surface (12) of the piston rod (10) is made of metallic material, especially of chromium or of steel, for example of hardened steel, of chromium-plated steel or of special steel,
**characterised in that**
- at least one covering (20), which is matched to the shape of the surface (12) and especially reproduces the inscription and/or marking (16), is placed onto the surface (12) so that the region to be provided with the inscription and/or marking (16) is not covered by the covering (20),
- the piston rod (10) with the covering (20) is exposed to a first electrolyte (30) by means of which material is removed from the surface (12) to form depressions (14) in the region to be provided with the inscription and/or marking (16), and
- the piston rod (10) with the covering (20) and with the depressions (14) not covered with the covering (20) is exposed to a second electrolyte (32) by means of which the depressions (14) are filled to form the inscription and/or marking (16) which differs optically, especially in colour, from the surface (12).

2. Method according to claim 1, **characterised in that** the depressions (14) are filled with black chromium, with black nickel, with black rhodium, with black ruthenium, with a copper/tin alloy, with a copper/tin/zinc alloy or with gold, especially with hard gold.

3. Method according to claim 1 or 2, **characterised in that** the covering (20) is formed
- by at least one mask made of plastics or of metal, with additional sealing between the mask and the surface (12) or
- by at least one stencil, especially made of self-adhesive foil and/or foil applied under tension, or
- by shrinkable material, especially by at least one shrinkable hose.

4. Method according to at least one of claims 1 to 3, **characterised in that** the covering (20) is
- in the form of varnish, especially protective varnish, spray varnish or dip varnish, or
- in the form of ink or
- in the form of at least one hot-melt coating.

5. Method according to claim 4, **characterised in that** the covering (20) is printed on the surface (12).

6. Method according to at least one of claims 1 to 5, **characterised in that** the depressions (14) are etched by means of the first electrolyte (30) into the regions of the surface (12) that are to be provided with the inscription and/or marking (16), which regions are not covered by the covering (20).

7. Method according to at least one of claims 1 to 6, **characterised in that** the piston rod (10) with the covering (20) is introduced or dipped into at least one bath or at least one solution of the first electrolyte (30) and/or of the second electrolyte (32).

8. Method according to at least one of claims 1 to 7, **characterised in that** the piston rod (10) provided with the covering (20) is coated using an electrode supplied with the first electrolyte (30) and/or with the second electrolyte (32), especially using an electrode dipped into the first electrolyte (30) and/or into the second electrolyte (32), at least in the region of the surface (12) not covered by the covering (20), in a tampon galvanising process.

9. Method according to claim 8, **characterised in that** the electrode is
- in the form of at least one plate encased in at least one sponge, sock, cloth, non-woven material or wadding tampon or
- in the form of at least one rod encased in at least one sponge, sock, cloth, non-woven material or wadding tampon
made of material that is insoluble in respect of the electrolyte.

10. Method according to at least one of claims 1 to 9, **characterised in that** the marking (16) has at least one barcode, especially at least one continuously biuniquely binary barcode.

11. Method according to at least one of claims 1 to 10, **characterised in that** the fluid cylinder is a hydraulic and/or pneumatic cylinder.

12. Method according to claim 10 and 11, **characterised in that** the code, especially for the purpose of optical position determination and/or path measurement, has an absolute code structure which reproduces the actual stroke or the actual position of the piston rod.

13. Fluid cylinder, especially a hydraulic and/or pneumatic cylinder having a piston rod which, for the purpose of optical position determination and/or path measurement, has a code (16) applied to the surface, which code has a code structure which reproduces the actual stroke or the actual position of the piston rod,
**characterised in that**
the code (16) has been applied by galvanic deposition in accordance with a method of one of the preceding claims,
- wherein a covering (20) that is matched to the shape of the surface (12) and reproduces the code (16) was applied to the surface (12) in such a way that the region to be provided with the inscription and/or marking (16) was not covered by the covering (20),
- wherein the piston rod (10) with the covering (20) was exposed to a first electrolyte (30) by means of which material was removed from the surface (12) to form depressions (14) in the region to be provided with the code (16), and
- wherein the piston rod (10) with the covering (20) and with the depressions (14) not covered by the covering (20) was exposed to a second electrolyte (32) by means of which the depressions (14) were filled to form the code (16) which differs optically, especially in colour, from the surface (12).

## Revendications

1. Procédé pour appliquer une inscription et/ou pour appliquer un marquage (16) sous la forme d'un code sur une tige de piston (10) d'un vérin à fluide, au moins la surface (12) de la tige de piston (10) étant en matériau métallique, en particulier en chrome ou en acier, par exemple en acier durci, en acier chromé ou en acier inoxydable,
**caractérisé en ce**
- **qu'**au moins un cache (20) adapté à la forme de la surface (12), représentant en particulier l'inscription et/ou le marquage (16), est placé sur la surface (12) de telle sorte que la zone à pourvoir de l'inscription et/ou du marquage (16) ne soit pas recouverte par le cache (20),
- **que** la tige de piston (10) présentant le cache (20) est exposée à un premier électrolyte (30) au moyen duquel de la matière est enlevée de la surface (12) dans la zone à pourvoir de l'inscription et/ou du marquage (16) avec formation de creux (14) et
- **que** la tige de piston (10) présentant le cache (20) et les creux (14) non recouverts par le cache (20) est exposée à un second électrolyte (32) au moyen duquel les creux (14) sont remplis pour former l'inscription et/ou le marquage (16) qui diffère optiquement, en particulier par la couleur, de la surface (12).

2. Procédé selon la revendication 1, **caractérisé en ce que** les creux (14) sont remplis de chrome noir, de nickel noir, de rhodium noir, de ruthénium noir, d'un alliage cuivre-étain, d'un alliage cuivre-étain-zinc ou d'or, en particulier d'or dur.

3. Procédé selon la revendication 1 ou 2, **caractérisé en ce que** le cache (20) est formé :
- par au moins un masque en matière plastique ou en métal, avec une étanchéité supplémentaire entre le masque et la surface (12), ou
- par au moins un gabarit, en particulier formé d'un film autocollant et/ou monté sous tension, ou
- par un matériau rétractable, en particulier par au moins une gaine thermorétractable.

4. Procédé selon au moins l'une des revendications 1 à 3, **caractérisé en ce que** le cache (20) est réalisé
- sous la forme d'un vernis, en particulier d'un vernis de protection, d'un vernis à pulvériser ou d'un vernis au trempé, ou
- sous la forme d'encre ou
- sous la forme d'au moins un revêtement thermofusible ou hot-melt.

5. Procédé selon la revendication 4, **caractérisé en ce que** le cache (20) est imprimé sur la surface (12).

6. Procédé selon au moins l'une des revendications 1 à 5, **caractérisé en ce que** les creux (14) sont gravés au moyen du premier électrolyte (30) dans les zones de la surface (12) non recouvertes par le cache (20) et devant être pourvues de l'inscription et/ou du marquage (16).

7. Procédé selon au moins l'une des revendications 1 à 6, **caractérisé en ce que** la tige de piston (10) présentant le cache (20) est placée ou plongée dans au moins un bain ou au moins une solution du premier électrolyte (30) et/ou du second électrolyte (32).

8. Procédé selon au moins l'une des revendications 1 à 7, **caractérisé en ce que** la tige de piston (10) pourvue du cache (20) est balayée avec une électrode alimentée par le premier électrolyte (30) et/ou par le second électrolyte (32), en particulier avec une électrode immergée dans le premier électrolyte (30) et/ou dans le second électrolyte (32), au moins dans la zone de la surface (12) non recouverte par le cache (20), par dépôt électrolytique au tampon.

9. Procédé selon la revendication 8, **caractérisé en ce que** l'électrode est réalisée dans un matériau non soluble par rapport à l'électrolyte
- sous la forme d'au moins une plaque entourée d'au moins une éponge, un bas, un tissu, un non-tissé ou un tampon d'ouate, ou
- sous la forme d'au moins une baguette entourée d'au moins une éponge, un bas, un tissu, un non-tissé ou un tampon d'ouate.

10. Procédé selon au moins l'une des revendications 1 à 9, **caractérisé en ce que** le marquage (16) présente au moins un code à barres, en particulier au moins un code à barres binaire univoque en continu.

11. Procédé selon au moins l'une des revendications 1 à 10, **caractérisé en ce que** le vérin à fluide est un vérin hydraulique et/ou pneumatique.

12. Procédé selon les revendications 10 et 11, **caractérisé en ce que** le code présente une structure de code absolue reproduisant la course réelle ou la position réelle de la tige de piston, en particulier pour la détermination optique de position et/ou la mesure optique de déplacement.

13. Vérin à fluide, en particulier vérin hydraulique et/ou pneumatique, comportant une tige de piston à la surface de laquelle est appliqué, pour la détermination optique de la position et/ou la mesure optique de déplacement, un code (16) qui présente une structure de code reproduisant la course réelle ou la position réelle de la tige de piston,
**caractérisé en ce**
**que** le code (16) est appliqué par dépôt électrolytique d'après un procédé selon l'une des revendications précédentes,
- dans lequel un cache (20) adapté à la forme de la surface (12), reproduisant le code (16), a été placé sur la surface (12) de telle sorte que la zone à pourvoir de l'inscription et/ou du marquage (16) n'était pas recouverte par le cache (20),
- dans lequel la tige de piston (10) présentant le cache (20) a été exposée à un premier électrolyte (30) au moyen duquel de la matière a été enlevé de la surface (12) dans la zone à pourvoir du code (16) avec formation de creux (14) et
- dans lequel la tige de piston (10) présentant le cache (20) et les creux (14) non recouverts par le cache (20) a été exposée à un second électrolyte (32) au moyen duquel les creux (14) ont été remplis pour former le code (16) qui diffère optiquement, en particulier par la couleur, de la surface (12).
